# EUROPÄISCHE PATENTSCHRIFT

(11) **EP 3 864 681 B1**
(45) Veröffentlichungstag und Bekanntmachung des Hinweises auf die Patenterteilung: **21.12.2022**
(21) Anmeldenummer: 19801483.9
(22) Anmeldetag: 21.10.2019
(51) Int. Cl.: H01F 38/30, H02B 13/035

(54) **STROMWANDLERMODUL FÜR EINE SCHALTANLAGE UND ENTSPRECHENDE SCHALTANLAGE**
CURRENT TRANSFORMER MODULE FOR A SWITCHGEAR AND CORRESPONDING SWITCHGEAR
MODULE TRANSFORMATEUR DE COURANT POUR UNE INSTALLATION DE COMMUTATION ET INSTALLATION DE COMMUTATION CORRESPONDANTE

(30) Priorität: 19.11.2018 DE 102018219803
(43) Veröffentlichungstag der Anmeldung: 18.08.2021
(73) Patentinhaber: Siemens Energy Global GmbH & Co. KG, 81739 München (DE)
(72) Erfinder: MÜLLER, Sebastian, 96199 Zapfendorf (DE); PRUCKER, Udo, 90571 Schwaig (DE)
(86) Internationale Anmeldenummer: PCT/EP2019/078494
(87) Internationale Veröffentlichungsnummer: WO 2020/104121

(56) Entgegenhaltungen:
- CN-A- 102 496 446
- DE-A1-102015 214 043
- US-A1- 2005 190 032

## Beschreibung

Die Erfindung betrifft ein Stromwandlermodul für eine Schaltanlage, insbesondere gasisolierte Schaltanlage, welche eine Rohrkapselung eines Strompfades aufweist, mit einem rohrförmigen Grundelement zur Bildung zumindest eines Abschnitts der Rohrkapselung und mit mindestens einer das rohrförmige Grundelement umfänglich umgebenden, ringförmigen Stromwandlereinheit.

Die Erfindung betrifft weiterhin eine entsprechende Schaltanlage mit einer Rohrkapselung eines Strompfades und einem derartigen Stromwandlermodul.

Die Druckschrift DE 10 2005 005 445 A1 zeigt ein Stromwandlermodul für eine gasisolierte Schaltanlage, welche eine Rohrkapselung eines Strompfades aufweist. Das Stromwandlermodul weist ein rohrförmiges Grundelement zur Bildung zumindest eines Abschnitts der Rohrkapselung und mehrere das rohrförmige Grundelement umfänglich umgebende Ringkerne auf. Die Druckschrift DE 10 2015 210 135 A1 zeigt ein ähnlich aufgebautes Stromwandlermodul mit Rohrkapselung. Derart aufgebaute Stromwandler werden für Wechselstromanwendungen genutzt.

Die Druckschrift DE 10 2015 214 043 A1 zeigt eine Anordnung mit einem Nullflussstromwandler für eine Freileitungs-Schaltung, bei welcher der Stromwandler als Nullfluss-Stromwandler für eine DC-Strommessung mittels Nullfluss-Strommesstechnik in einem ringförmigen Kerngehäuse angeordnet ist.

Die Druckschriften US 2005/190032 A1 und CN 102 496 446 A beschreiben ebenfalls Stromwandlermodule für gasisolierte Schaltanlagen.

Es ist die Aufgabe der Erfindung Maßnahmen anzugeben, durch die sich neue Einsatzgebiete für Stromwandlermodule für Schaltanlagen mit Rohrkapselungen ergeben.

Die Lösung der Aufgabe erfolgt durch die Merkmale der unabhängigen Ansprüche. Vorteilhafte Ausgestaltungen sind in den Unteransprüchen angegeben.

Bei dem erfindungsgemäßen Stromwandlermodul für eine Schaltanlage, insbesondere gasisolierte Schaltanlage, welche eine Rohrkapselung eines Strompfades umfasst, weist die Schaltanlage (i) ein zwei elektrisch leitfähige Endstücke aufweisendes rohrförmiges Grundelement zur Bildung zumindest eines Abschnitts der Rohrkapselung und (ii) mindestens eine ringförmige Stromwandlereinheit auf, die auf dem rohrförmigen Grundelement angeordnet ist und das rohrförmige Grundelement dabei umfänglich umgibt. Es ist vorgesehen, dass die Stromwandlereinheit oder zumindest eine der Stromwandlereinheiten als Nullfluss-Stromwandlereinheit für eine Strommessung mittels Nullfluss-Strommesstechnik ausgestaltet sind. Die Nullfluss-Strommesstechnik ermöglicht auch DC-Strommessungen. Durch diese Maßnahme wird das Einsatzspektrum des Stromwandlermoduls somit klar erweitert. Insbesondere sind alle Stromwandlereinheiten als Nullfluss-Stromwandlereinheiten ausgebildet.

Stromsensoren, die nach dem Nullfluss- oder Zero-Flux-Messprinzip arbeiten (engl.: AC/DC zero-flux current sensor), sind bekannt. Den zentralen Aufbau solcher Sensoren kann man auch als Nullfluss-Stromwandlereinheit (Zero-Flux-Stromwandlereinheit) bezeichnen. Die eingangs erwähnte Druckschrift DE 10 2015 214 043 A1 zeigt eine Anordnung mit Nullfluss-Stromwandlereinheit, die eine Kompensationswicklung, eine Detektionswicklung und ein ringförmiges Kerngehäuse aufweist.

Die Endstücke des rohrförmigen Grundelements sind vorzugsweise als Flansche ausgebildet, über die das rohrförmige Grundelement zwischen zwei anderen Komponenten der Schaltanlage befestigt ("zwischengeflanscht") werden kann.

Gemäß einer bevorzugten Ausgestaltung der Erfindung weist das rohrförmige Grundelement in einer Sektion ein Isolierelement auf, welches die beiden Endstücke des rohrförmigen Grundelements Grundelement-intern voneinander elektrisch isoliert. Das Isolierelement, welches in der Regel ring- oder rohrförmig ist, ist in axialer Richtung beidseitig von metallisch leitenden Komponenten des Grundelements umgeben.

Grundsätzlich ist es denkbar, dass der komplette Zwischenteil des rohrförmigen Grundelements zwischen den Endstücken vom Isolierelement gebildet wird, sich dieses rohrförmig ausgestaltete Isolierelement also als Rohrabschnitt des Grundelements vom einen bis zum anderen Endstück erstreckt. Insbesondere ist jedoch vorgesehen, dass ein zwischen den Endstücken angeordneter Rohrabschnitt des Grundelements im Wesentlichen von einem metallischen Rohrstück gebildet wird, wobei in dem Rohrabschnitt ein umlaufender Isolierspalt innerhalb der Sektion mit dem Isolierelement ausgebildet ist. Der Isolierspalt bildet sich außerhalb oder innerhalb des Isolierelements vorzugsweise zwischen dem metallischen Rohrstück und einem der Endstücke aus. Bei dem Stromwandlermodul bzw. seinem Grundelement handelt es sich insbesondere um eine gasdichte Anordnung für die Verwendung in einer gasisolierten Schaltanlage. Die Gasdichtigkeit ist dabei bevorzugt im Bereich bis 30 bar.

Das Grundelement ist die Basis, auf der die mindestens eine Stromwandlereinheit angeordnet ist.

Dabei ist bevorzugt vorgesehen, dass die mindestens eine Stromwandlereinheit in einem Abschnitt des rohrförmigen Grundelements angeordnet ist, in die von dem metallische Rohrstück gebildet wird. Dieser Abschnitt ist in der Regel mechanisch stärker belastbar als die Sektion mit dem rohrförmigen Isolierelement.

Besonders bevorzugt ist vorgesehen, dass der Isolierspalt eine Breite aufweist, die höchstens 1/10 (≤ 1/10) der axialen Gesamtlänge des Stromwandlermoduls bzw. dessen Grundelements entspricht. Für einen schmalen Isolierspalt wird auch nur ein kurzes Isolierelement benötigt. Der Rest des rohrförmigen Grundelements kann aus robusteren Materialien, insbesondere Metall, gefertigt sein.

Gemäß einer weiteren bevorzugten Ausgestaltung der Erfindung weist das Grundelement in der Sektion mit dem Isolierelement eine Elektrode auf. Diese Elektrode kann als Abschirmelektrode aufgefasst werden oder als Elektrode eines Kondensators.

Bevorzugt ist vorgesehen, dass mehrere Stromwandlereinheiten vorgesehen sind und dass das Stromwandlermodul einen gemeinsamen Anschlusskasten für diese Stromwandlereinheiten aufweist. Durch den modularen Aufbau können die Anschlussmöglichkeiten für die Stromwandlereinheiten vorkonfektioniert sein. Der Anschlusskasten ist insbesondere als Klemmenkasten ausgestaltet.

Bevorzugt weist das Stromwandlermodul zumindest ein elektrisch leitfähiges Verbindungselement auf, das außen um die mindestens eine Stromwandlereinheit herum führt und die beiden Endstücke des rohrförmigen Grundelements elektrisch leitend verbindet. Dieses leitfähige Verbindungselement ist insbesondere als Stromwandlermantel ausgebildet, der die mindestens eine Stromwandlereinheit umgibt. Fließt ein Strom von bis zu mehreren Kiloampere zwischen den beiden Endstücken, so fließt er außen um die mindestens eine Stromwandlereinheit herum und kann separat vom Strom entlang des Strompfades erfasst werden.

Schließlich ist bezüglich des Moduls bevorzugt vorgesehen, dass die mindestens eine ringförmige Stromwandlereinheit auf dem rohrförmige Grundelement, insbesondere dem metallischen Rohrstück und zentrisch zum Rohrleiter, befestigt ist. Bevorzugt ist die mindestens eine ringförmige Stromwandlereinheit auf dem rohrförmige Grundelement fest vergossen. Das Grundelement ist bezüglich der Stromwandlereinheiten der Träger. Ein weiterer Träger wird nicht benötigt.

Bei der erfindungsgemäßen Schaltanlage, insbesondere gasisolierte Schaltanlage, die eine Rohrkapselung eines Strompfades aufweist, ist vorgesehen, dass diese ein vorstehend genanntes Stromwandlermodul umfasst. Dieses wird einfach komplett zwischen zwei weitere Komponenten der Anlage "zwischengeflanscht".

Im Folgenden werden Ausführungsbeispiele der Erfindung schematisch in Zeichnungen gezeigt und nachfolgend näher beschrieben. Dabei zeigen:
- Fig. 1: ein geschnittenes Stromwandlermodul gemäß einer ersten bevorzugten Ausführungsform der Erfindung in einer Seitenansicht und
- Fig. 2: eine Schnittdarstellung des in Fig. 1 gezeigten Stromwandlermoduls.

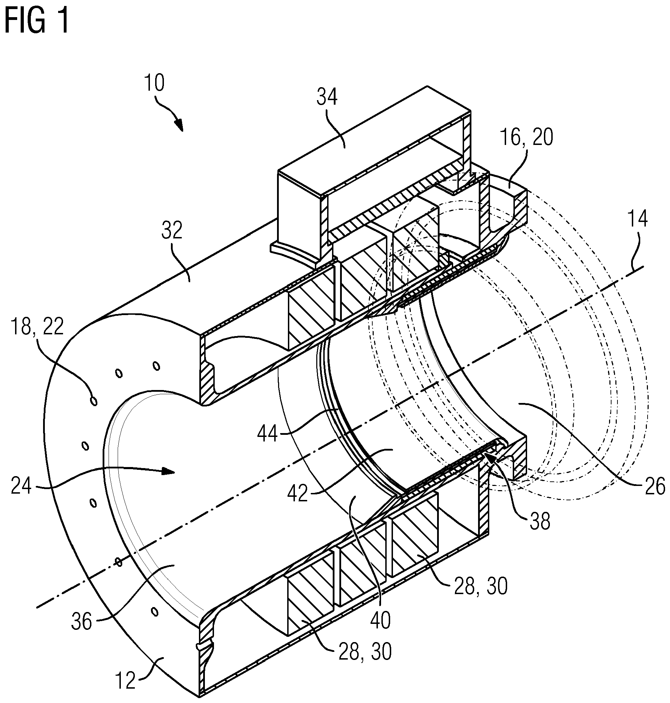

Die Fig. 1 zeigt ein Stromwandlermodul 10 zum Einbau in eine (nicht gezeigte) Schaltanlage, genauer gesagt eine gasisolierte Schaltanlage. Eine solche Schaltanlage umfasst unter anderem eine Rohrkapselung eines (ebenfalls nicht explizit gezeigten) Strompfades, was auch als Rohrleiter bezeichnet wird. Im Bereich dieser Rohrkapselung wird nun das Stromwandlermodul 10 eingebaut. Basis des Stromwandlermodul 10 ist ein rohrförmiges Grundelement 12, welches sich entlang einer Achse 14 erstreckt. Bei montiertem Stromwandlermodul 10 bildet das Grundelement 12 einen Abschnitt der Rohrkapselung bzw. eines Außenrohres des Rohrleiters. Der entsprechende Leiter, der den Strompfad vorgibt, erstreckt sich dann entlang der Achse 14. Das in die Schaltanlage eingebaute Stromwandlermodul 10 bildet also einen Teil der Rohrkapselung des Strompfades. Dieser verläuft dann in der Regel entlang der Achse 14. Zu diesem Zweck weist das rohrförmige Grundelement 12 elektrisch leitfähige Endstücke 16, 18 auf, die als Flansche 20, 22 ausgebildet sind. Über diese Flansche 20, 22 kann das rohrförmige Grundelement 12 zwischen zwei anderen Komponenten der Schaltanlage zwischengeflanscht werden. Auf diese Weise wird das Modul 10 zu einem Teil der Rohrkapselung. Ein Rohrabschnitt 24 zwischen den Endstücken 16, 18 bildet den Mittelteil des rohrförmigen Grundelements 12. Das Innere des rohrförmigen Grundelements 12 bildet einen Gasraum 26 für ein Schutzgas der gasisolierten Schaltanlage.

Das Stromwandlermodul 10 weist weiterhin mehrere (hier drei) ringförmige Stromwandlereinheiten 28 auf, die alle als Nullfluss-Stromwandlereinheiten 30 ausgebildet und auf dem rohrförmigen Grundelement 12 angeordnet sind. Jede der Stromwandlereinheiten 28, 30 umgibt das rohrförmige Grundelement 12 dabei umfänglich mit einem Stromwandlerkern, der die Form der Stromwandlereinheit 28, 30 im Wesentlichen bestimmt. Weiterhin weist das Stromwandlermodul 10 ein elektrisch leitfähiges Verbindungselement 32 in Form eines Stromwandlermantels auf, der die mindestens Stromwandlereinheiten 28, 30 umgibt und die beiden Endstücke 16, 18 des rohrförmigen Grundelements 12 elektrisch leitend verbindet. Fließt ein Strom zwischen den beiden Endstücken 16, 18, so fließt er nicht über das rohrförmige Grundelement 12 sondern außen um die Stromwandlereinheiten 28, 30 herum und wird von ihnen nicht mit erfasst. Die Stromwandlereinheiten 28, 30 erfassen somit nur den Strom des Strompfades im Inneren des rohrförmigen Grundelements 12. Außen auf dem Stromwandlermantel ist ein gemeinsamer Anschlusskasten 34 für alle Stromwandlereinheiten 28, 30 montiert.

Das rohrförmige Grundelement 12 ist, wie bereits angedeutet, längs der Achse 14 nicht durchgehend leitfähig. Mit anderen Worten ist das erste Endstück 16 vom zweiten Endstück 18 elektrisch isoliert. Zu diesem Zweck ist nicht der gesamte Rohrabschnitt 24, sondern nur ein großer Teil von ihm als metallisches Rohrstück 36 ausgebildet. Dieses erstreckt sich in axialer Richtung vom zweiten der Endstücke 18 in Richtung des ersten der Endstücke 16, reicht aber nicht bis zu diesem. Es ergibt sich ein Übergang vom metallischen Rohrstück 36 zu dem ersten Endstück 18 über ein rohrförmiges Isolierelement 38 (Isolierteil). Dieses ist beispielsweise aus GFK-Material (GFK: Glasfaserverstärkter Kunststoff) erstellt.

Auf der Innenseite des metallischen Rohrstücks 36 befindet sich ein Abschlussring 40, der eine Einheit mit dem Rohrstück 36 und dem Endstück 18 bzw. Flansch 22 bildet. Diese Einheit ist insbesondere eine Einheit aus einstückig miteinander verbundenen Komponenten 18, 22, 36, 40, bevorzugt als Gussteil realisiert. Zwischen dem Abschlussring 40 und dem ersten Endstück 16 ist das Isolierelement 38 montiert, welches nach innen von einer leitend mit dem ersten Endstück 16 verbundenen Elektrode 42 abgedeckt ist, die man auch als Abschirmelektrode auffassen kann. Diese reicht jedoch nicht bis zum Abschlussring 40. Es bildet sich eine Art Kondensatorwickel 44, bei dem sich zwischen Elektrode 42 und Isolierelement 38 bzw. Abschlussring 40 eine Dielektrikumsschicht befindet.

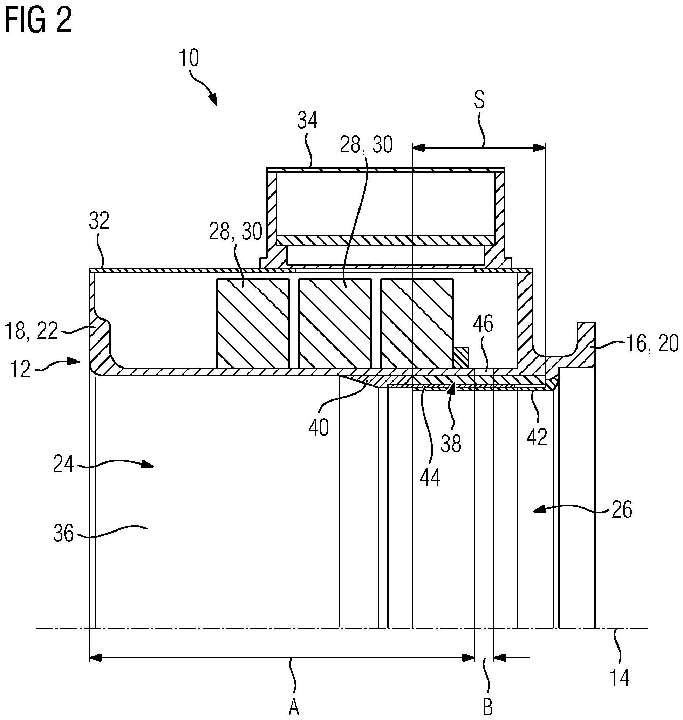

Die Fig. 2 zeigt eine Schnittdarstellung des in Fig. 1 gezeigten Stromwandlermoduls 10. Dabei ist jedoch nur ein oberer Teil (mit dem Anschlusskasten 34) bis zur Achse 14 gezeigt. In dieser Darstellung ist die Position der Stromwandlereinheit 28 gut erkennbar: alle Stromwandlereinheiten 28 sind auf dem metallischen Rohrstück 36 durch festes vergießen befestigt, wo sie stabil gehalten werden. Das metallische Rohrstück 36 selbst erstreckt sich im Abschnitt A vom zweiten Endstück 18 in Richtung des ersten Endstücks 16, erreicht dieses jedoch nicht. Es verbleibt ein als Ringspalt ausgestalteter Isolierspalt 46 zwischen dem metallischen Rohrstück 36 und dem ersten Endstück 16. Dieser Spalt 46 befindet sich außen auf dem Isolierelement 38, welches sich in der vom ersten Endstück 16 axial abgehenden Sektion S befindet. Der Spalt 46 hat eine Breite B, die im Vergleich zur axialen Gesamtlänge des Stromwandlermoduls 10 bzw. Grundelements 12 insgesamt sehr klein ist.

Dadurch, dass die Stromwandlereinheiten 28 als Nullfluss-Stromwandlereinheiten 30 ausgestaltet sind, ist nun (zusätzlich zur üblichen AC-Strommessung) auch eine DC-Strommessung möglich. Die Stromwandlereinheiten 28 sind also Nullfluss-Stromwandlereinheiten 30 für DC-Strommessungen mittels Nullfluss-Strommesstechnik.

Im Folgenden soll die erfindungsgemäße Lösung und ihre Ausgestaltungen nun noch einmal mit einem üblichen Standard-Aufbau verglichen werden.

Bei diesem Standard-Aufbau gibt es separate Stromwandler-Bausteine mit Ringkernen, die auf ein Rohrelement der Rohrkapselung "aufgefädelt" werden. Es handelt sich also nicht um ein vorkonfektioniertes Modul mit miteinander verbundenen Komponenten Grundelement und Stromwandlereinheit, wie es das erfindungsgemäße Stromwandlermodul ist.

Das Problem dieses Standard-Aufbaus ist, das er sehr platz- und kostenintensiv und technisch nicht optimal gelöst ist. Bei diesem bisherigen Aufbau sind die Kerne - insbesondere bei Offshore-Anwendung - den Umwelteinflüssen unmittelbar ausgesetzt. Der Platzbedarf ist sehr hoch, da die Kerne einzeln mit größeren Abständen auf einen teuren GIS Isolierbaustein aufgesetzt werden müssen.

Beim Standard-Aufbau werden weiterhin wichtige elektrisch Kenngrößen nicht erfasst:
1. Im Kurzschlussfall wird der Strom nicht gemessen, da dieser nicht über das Gehäuse abgeleitet wird.
2. Schnelle transiente Spannungen werden nicht übertragen und gemessen.

Die erfindungsgemäße Lösung kann nun für DC Anwendungen zum Einsatz kommen, da Stromwandlereinheiten 30 mit Kernen genutzt werden, die das Zero Flux Prinzip nutzen. Hierzu werden die bestehenden Induktiven Kerne durch das Teils elektronische Zero Flux System ersetzt.

Die außenliegende Stromwandlereinheiten 30 ersetzen folgende, sonst separate Bausteine des Standard-Aufbaus:
1. Die Isolierbausteine für die Montage der Kerne. Hier wird im Stromwandlermodul 10 durch das eingesetzte Isolierelement 38 der Trennspalt 46 geschaffen, welcher verhindert dass ein evtl. Kurzschlussstrom durch das Grundelement 12 geleitet wird. Der Kurzschlussstrom wird über das verschweißte Mantelblech des als Stromwandlermantel ausgebildeten Verbindungselements 32 geführt. Somit kann dieser Strom separat erfasst werden.
2. Die beim Standard-Aufbau üblichen einzelnen Anschluss- bzw. Klemmenkästen der einzelnen Kerne. Hier werden alle Kabel in einem gemeinsamen Anschluss- bzw. Klemmenkasten 34 gebündelt und verdrahtet und können dann zur Auswerteeinheit geführt werden.
3. Die beim Standard-Aufbau übliche Fixierung der Kerne. Die Stromwandlereinheiten bzw. deren Kerne werden beim Modul auf dem Grundelement 12 als Kernträger fest vergossen. Im Moment werden Sie auf dem Boden verschraubt.

Es ergeben sich die folgenden Vorteile:
Beim Stromwandlermodul 10 ist nun eine Vorprüfung des Moduls als Gesamtsystem möglich. Eine Vorprüfung des Komplettsystems kann vor Auslieferung erfolgen, da der Stromwandler als Komplettsystem, nämlich dem Stromwandlermodul 10, verbaut werden kann. Somit ist eine genaue Messwerterkennung gewährleistet und vorgeprüft.

Es ist eine Schirmung gegen transiente Überspannungen (VFT - very fast transient) vorgesehen. Im Stromwandlermodul 10 wird dies durch einen Kondensatorwickel 44 im Isolierspalt 46 gelöst und ist in der AC Anwendung erprobt.

### Bezugszeichenliste

- 10: Stromwandlermodul
- 12: Grundelement, rohrförmig
- 14: Achse
- 16: Endstück
- 18: Endstück
- 20: Flansch
- 22: Flansch
- 24: Rohrabschnitt
- 26: Gasraum
- 28: Stromwandlereinheit
- 30: Nullfluss- Stromwandlereinheit
- 32: Verbindungselement
- 34: Anschlusskasten
- 36: Rohrstück, metallisch
- 38: Isolierelement
- 40: Abschlusselement, ringförmig
- 42: Elektrode
- 44: Kondensatorwickel
- 46: Isolierspalt
- A: Abschnitt
- B: Breite
- S: Sektion

## Patentansprüche

1. Stromwandlermodul (10) für eine Schaltanlage, insbesondere gasisolierte Schaltanlage, welche eine Rohrkapselung eines Strompfades aufweist, mit
- einem zwei elektrisch leitfähige Endstücke (16, 18) aufweisenden rohrförmigen Grundelement (12) zur Bildung zumindest eines Abschnitts der Rohrkapselung und
- mindestens eine ringförmige Stromwandlereinheit (28), die auf dem rohrförmigen Grundelement (12) angeordnet ist und das rohrförmige Grundelement (12) dabei umfänglich umgibt,
**dadurch gekennzeichnet, dass**
die Stromwandlereinheit (28) oder zumindest eine der Stromwandlereinheiten (28) als Nullfluss-Stromwandlereinheit (30) für eine Strommessung mittels Nullfluss-Strommesstechnik ausgestaltet ist.

2. Stromwandlermodul nach Anspruch 1,
**dadurch gekennzeichnet, dass**
das rohrförmige Grundelement (12) in einer Sektion (S) ein Isolierelement (38) aufweist, welches die beiden Endstücke (16, 18) des rohrförmigen Grundelements (12) Grundelement-intern voneinander elektrisch isoliert.

3. Stromwandlermodul nach Anspruch 2,
**dadurch gekennzeichnet, dass**
ein zwischen den Endstücken (16, 18) angeordneter Rohrabschnitt (24) des rohrförmigen Grundelements (12) im Wesentlichen von einem metallischen Rohrstück (36) gebildet wird, wobei in dem Rohrabschnitt (24) ein umlaufender Isolierspalt (46) innerhalb der Sektion (S) mit dem Isolierelement (38) ausgebildet ist.

4. Stromwandlermodul nach Anspruch 3,
**dadurch gekennzeichnet, dass**
die mindestens eine Stromwandlereinheit (28) in einem Abschnitt (A) des rohrförmigen Grundelements (12) angeordnet ist, in dem das metallische Rohrstück (36) angeordnet ist.

5. Stromwandlermodul nach Anspruch 3 oder 4,
**dadurch gekennzeichnet, dass**
der Isolierspalt (46) eine Breite aufweist, die höchstens 1/10 der axialen Gesamtlänge des Stromwandlermoduls (10) entspricht.

6. Stromwandlermodul nach einem der Ansprüche 2 bis 5,
**dadurch gekennzeichnet, dass**
das Grundelement (12) in der Sektion (S) mit dem Isolierelement (38) eine Elektrode (44) aufweist.

7. Stromwandlermodul nach einem der Ansprüche 1 bis 6,
**gekennzeichnet durch**
mehrere Stromwandlereinheiten (30) und einen gemeinsamen Anschlusskasten (34) für diese Stromwandlereinheiten (30).

8. Stromwandlermodul nach einem der Ansprüche 1 bis 7,
**gekennzeichnet durch**
zumindest ein elektrisch leitfähiges Verbindungselement (32), das außen um die mindestens eine Stromwandlereinheit (28) herum geführt ist und die beiden Endstücke (16, 18) des rohrförmigen Grundelements (12) elektrisch leitend verbindet.

9. Stromwandlermodul nach einem der Ansprüche 1 bis 8, **dadurch gekennzeichnet, dass**
die mindestens eine ringförmige Stromwandlereinheit (28) auf dem rohrförmige Grundelement (12), insbesondere dem metallischen Rohrstück (36), befestigt ist.

10. Schaltanlage, insbesondere gasisolierte Schaltanlage, die eine Rohrkapselung eines Strompfades aufweist,
**gekennzeichnet durch**
ein Stromwandlermodul (10) nach einem der Ansprüche 1 bis 9.

## Claims

1. Current transformer module (10) for switchgear, in particular gas-insulated switchgear, that has a tubular encapsulation for a current path, comprising
- a tubular base element (12), which has two electrically conductive end pieces (16, 18), for forming at least a portion of the tubular encapsulation, and
- at least one annular current transformer unit (28) that is arranged on the tubular base element (12) and circumferentially surrounds the tubular base element (12),
**characterized in that**
the current transformer unit (28) or at least one of the current transformer units (28) is configured as a zero-flux current transformer unit (30) for a current measurement by means of zero-flux measurement technology.

2. Current transformer module according to Claim 1,
**characterized in that**
the tubular base element (12), in one section (S), has an insulating element (38) that electrically insulates the two end pieces (16, 18) of the tubular base element (12) from one another inside the base element.

3. Current transformer module according to Claim 2,
**characterized in that**
a tube portion (24), arranged between the end pieces (16, 18), of the tubular base element (12) is formed essentially of a metallic tube piece (36), wherein a circumferential insulating gap (46) is formed in the tube portion (24) within the section (S) with the insulating element (38).

4. Current transformer module according to Claim 3,
**characterized in that**
the at least one current transformer unit (28) is arranged in a portion (A) of the tubular base element (12) in which the metallic tube piece (36) is arranged.

5. Current transformer module according to Claim 3 or 4,
**characterized in that**
the insulating gap (46) has a width that corresponds to at most 1/10 of the axial total length of the current transformer module (10).

6. Current transformer module according to one of Claims 2 to 5,
**characterized in that**
the base element (12) has an electrode (44) in the section (S) with the insulating element (38).

7. Current transformer module according to one of Claims 1 to 6,
**characterized by**
a plurality of current transformer units (30) and a common terminal box (34) for these current transformer units (30).

8. Current transformer module according to one of Claims 1 to 7,
**characterized by**
at least one electrically conductive connecting element (32) that is guided externally around the at least one current transformer unit (28) and electrically conductively connects the two end pieces (16, 18) of the tubular base element (12).

9. Current transformer module according to one of Claims 1 to 8,
**characterized in that**
the at least one annular current transformer unit (28) is fastened on the tubular base element (12), in particular the metallic tube piece (36).

10. Switchgear, in particular gas-insulated switchgear, which has a tubular encapsulation for a current path,
**characterized by**
a current transformer module (10) according to one of Claims 1 to 9.

## Revendications

1. Module transformateur de courant (10) destiné à une installation de commutation, en particulier une installation de commutation à isolation gazeuse, qui présente une enveloppe tubulaire d'un chemin de courant, qui comprend :
- un élément de base de forme tubulaire (12) qui présente deux pièces terminales électroconductrices (16, 18) pour la formation d'au moins un tronçon de l'enveloppe tubulaire ; et
- au moins une unité transformatrice de courant de forme annulaire (28) qui est disposée sur l'élément de base de forme tubulaire (12) et qui entoure en l'occurrence de manière circonférentielle l'élément de base de forme tubulaire (12) ;
**caractérisé en ce que**
l'unité transformatrice de courant (28) ou au moins une des unités transformatrices de courant (28) est conçue sous la forme d'une unité transformatrice de courant à flux nul (30) destiné à une mesure du courant au moyen d'une technique de mesure du courant à flux nul.

2. Module transformateur de courant selon la revendication 1, **caractérisé en ce que** l'élément de base de forme tubulaire (12) présente, dans un tronçon (S), un élément isolant (38) qui confère, aux deux pièces terminales (16, 18) de l'élément de base de forme tubulaire (12), une isolation électrique réciproque interne à l'élément de base.

3. Module transformateur de courant selon la revendication 2, **caractérisé en ce qu'**un tronçon tubulaire (24) de l'élément de base de forme tubulaire (12) disposé entre les pièces terminales (16, 18) est réalisé à titre essentiel à partir d'une pièce tubulaire métallique (36) ; dans lequel, dans le tronçon tubulaire (24), est réalisé un interstice d'isolation périphérique (46) au sein du tronçon (S) qui comprend l'élément isolant (38).

4. Module transformateur de courant selon la revendication 3, **caractérisé en ce que** ladite au moins une unité transformatrice de courant (28) est disposée dans un tronçon (A) de l'élément de base de forme tubulaire (12), dans lequel est disposée la pièce tubulaire métallique (36).

5. Module transformateur de courant selon la revendication 3 ou 4, **caractérisé en ce que** l'interstice d'isolation (46) présente une largeur qui correspond au maximum à 1/10 de la longueur axiale totale du module transformateur de courant (10).

6. Module transformateur de courant selon l'une quelconque des revendications 2 à 5, **caractérisé en ce que** l'élément de base (12) présente une électrode (44) dans le tronçon (S) qui comprend l'élément isolant (38).

7. Module transformateur de courant selon l'une quelconque des revendications 1 à 6, **caractérisé par** plusieurs unités transformatrices de courant (30) et par un boîtier de raccordement commun (34) pour ces unités transformatrices de courant (30).

8. Module transformateur de courant selon l'une quelconque des revendications 1 à 7, **caractérisé par** au moins un élément de liaison électroconducteur (32), qui est guidé à l'extérieur tout autour de ladite au moins une unité transformatrice de courant (28) et qui relie d'une manière électroconductrice les deux pièces terminales (16, 18) de l'élément de base de forme tubulaire (12).

9. Module transformateur de courant selon l'une quelconque des revendications 1 à 8, **caractérisé en ce que** ladite au moins une unité transformatrice de courant de forme annulaire (28) est fixée sur l'élément de base de forme tubulaire (12), en particulier sur la pièce tubulaire métallique (36).

10. Installation de commutation, en particulier installation de commutation à isolation gazeuse, qui présente une enveloppe tubulaire d'un chemin de courant, **caractérisée par** un module transformateur de courant (10) selon l'une quelconque des revendications 1 à 9.
